# EUROPÄISCHE PATENTSCHRIFT

(11) **EP 2 188 206 B1**
(45) Veröffentlichungstag und Bekanntmachung des Hinweises auf die Patenterteilung: **24.10.2012**
(21) Anmeldenummer: 08802970.7
(22) Anmeldetag: 07.08.2008
(51) Int. Cl.: C01B 3/00

(54) **SPEICHERANORDNUNG ZUM REVERSIBLEN SPEICHERN VON WASSERSTOFF UND VERFAHREN ZUM BETREIBEN EINER DERARTIGEN SPEICHERANORDNUNG**
STORAGE ARRANGEMENT FOR THE REVERSIBLE STORAGE OF HYDROGEN AND METHOD FOR OPERATING SUCH A STORAGE ARRANGEMENT
SYSTÈME DE STOCKAGE POUR LE STOCKAGE RÉVERSIBLE D'HYDROGÈNE, ET PROCÉDÉ DE FONCTIONNEMENT

(30) Priorität: 11.08.2007 DE 102007038052
(43) Veröffentlichungstag der Anmeldung: 26.05.2010
(73) Patentinhaber: SARNCAP AG, 6060 Sarnen (CH)
(72) Erfinder: CALIEBE, Reinhard, 95182 Döhlau Ot Tauperlitz (DE)
(74) Vertreter: Kinnstätter, Klaus
(86) Internationale Anmeldenummer: PCT/EP2008/060376
(87) Internationale Veröffentlichungsnummer: WO 2009/021896

(56) Entgegenhaltungen:
- DE-A1-102006 030 449
- GB-A- 2 009 239
- T. NORBY: "The promise of protonics" NATURE, Bd. 410, 2001, Seiten 877-878, XP002521686
- ZAIDMAN B ET AL: "Formate salts as chemical carriers in hydrogen storage and transportation" INTERNATIONAL JOURNAL OF HYDROGEN ENERGY, ELSEVIER SCIENCE PUBLISHERS B.V., BARKING, GB, Bd. 11, Nr. 5, 1. Januar 1986 (1986-01-01), Seiten 341-347, XP025414072 ISSN: 0360-3199 [gefunden am 1986-01-01]
- KRAMER H ET AL: "Hydrogen storage by the bicarbonate/formate reaction. Studies on the activity of Pd catalysts" INTERNATIONAL JOURNAL OF HYDROGEN ENERGY, ELSEVIER SCIENCE PUBLISHERS B.V., BARKING, GB, Bd. 20, Nr. 3, 1. März 1995 (1995-03-01), Seiten 229-233, XP004041169 ISSN: 0360-3199
- WIENER H ET AL: "Storage of energy by solutions of alkali formate salts" SOLAR ENERGY, PERGAMON PRESS. OXFORD, GB, Bd. 43, Nr. 5, 1. Januar 1989 (1989-01-01), Seiten 291-296, XP025452579 ISSN: 0038-092X [gefunden am 1989-01-01]

## Beschreibung

Die vorliegende Erfindung betrifft eine Speicheranordnung zum reversiblen Speichern von Wasserstoff und ein Verfahren zum Betreiben einer derartigen Speicheranordnung.

Mit vielfältigen Methoden und Verfahren wird versucht, Energie in Form von Wasserstoff zu speichern. Bei diesen Verfahren wird der Wasserstoff beispielsweise über Elektrolyse, Photolyse oder Thermolyse gewonnen. Beispielsweise wird in industriellem Maßstab Zinkoxid (ZnO) in Sonnenkonzentratoren als Reaktor bei über 2000°C thermolytisch in Zink und Sauerstoff gespalten. Das Zink wird im Weiteren benutzt, um Wasser zu spalten und so Wasserstoff freizusetzen. Dabei wird das Zink wieder zu Zinkoxid oxidiert, so dass es erneut dem Reaktor zugeführt werden kann.

Ein Transport des Zinks zum Ort des Energiebedarfs und Rücktransport des Zinkoxides zum Reaktor ist aus Gewichtsgründen unrentabel. Daher wird zur Verteilung der gewonnenen Energie entweder direkt der Wasserstoff oder der daraus erzeugte Strom verwendet. Der Strom kann beispielsweise mittels Brennstoffzellen erzeugt werden.

Weitere bekannte Verfahren liegen im Bereich der Photolyse. Bei diesem Verfahren wird Wasser durch Einstrahlung von Sonnenlicht mit verschiedensten Katalysatoren in Wasserstoff und Sauerstoff gespalten. Der dabei erreichte Wirkungsgrad der Umsetzung des Lichts liegt über dem von bekannten Photovoltaik-Sonnenkollektoren. Photolytische Reaktoren sind bisher jedoch nur im Labormaßstab realisiert worden.

Alle Verfahren der Energiegewinnung aus sogenannten regenerativen Energien stellen keine vergleichbare Kontinuität bei der Energiegewinnung sicher, wie sie beispielsweise mittels fossiler Energieträger oder Atomkraft realisierbar ist. Eine Kontinuität bei der Energieversorgung ist nur dann zu gewährleisten, wenn ein Puffer für beispielsweise Wasserstoff eine kontinuierliche Verfügbarkeit der gewonnenen Energie ermöglicht.

Der entscheidende Nachteil von gasförmigem Wasserstoff liegt in seiner geringe Dichte. Bereits geringe Mengen von Wasserstoff benötigen daher erhebliche Volumina. Die Dichte kann zwar durch Drucktanks oder durch Verflüssigung erhöht werden. Der dafür erforderliche Aufwand an Technik und Energie reduziert den im Ergebnis erreichbaren Wirkungsgrad jedoch zu stark. Beispielsweise muss flüssiger Wasserstoff beständig gekühlt und unter Druck gehalten werden, um ein Verdampfen zu vermeiden.

Wasserstoff lässt sich in höherer Dichte chemisch binden und speichern. Hierfür werden beispielsweise Metallhydride wie Magnesiumhydrid, Aluminiumhydrid, Lithiumhydrid oder Kalziumhydrid verwendet. Bei diesen Vorgehensweisen benötigt man je nach Metallhydrid zum Be- und Entladen erhöhte Drücke, Kühlung und hohe Temperaturen (teilweise über 200°C). Die Handhabung beispielsweise von Aluminiumhydrid (Alanat) ist nur mit kleinen, technisch sehr aufwändigen druckfesten Tanks möglich. Diese Tanks müssen mit Vorrichtungen zum Erhitzen und Kühlen sowie mit kapillaren Ein- und Ausleitungen für das Wasserstoffgas ausgestattet sein. Für diese Maßnahmen steigt das "Verpackungsgewicht" für den Wasserstoff enorm an. Speicherung und Transport größerer Mengen von Wasserstoff in Form von Alanaten werden dadurch unrentabel.

Es sind viele effektive Technologien zur Umwandlung der in Wasserstoff gebundenen Energie in Strom bekannt. Beispielhaft werden die folgenden Patentpublikationen genannt: DE 101 18 744 B4, DE 103 24 200 A1, DE 103 24 201 A1, DE 103 92 493 T5.

Auch zur Nutzung der in Wasserstoff gebundenen Energie durch direkte Verbrennung sind Lösungen bekannt. Beispielsweise befinden sich bei Kraftfahrzeugherstellern Verbrennungsmotoren in der Entwicklung, bei welchen Wasserstoff in den Verbrennungsraum eingespritzt wird.

Es besteht daher ein Bedarf für eine Speicheranordnung, welche eine effektive Möglichkeit schafft, Wasserstoff transportieren und reversibel speichern zu können. Als "Messlatte" dienen hierbei die bekannten fossilen Energieträger, beispielsweise Benzol oder flüssige Kohlenwasserstoffe, insbesondere solche mit niedrigem Kohlenstoff- und hohem Wasserstoffanteil.

Aus der DE 10 2006 030 449 A1 ist eine Speicheranordnung zum reversiblen Speichern von Wasserstoff bekannt, bei der Kaliumcarbonat und Wasserstoff katalytisch zu Kaliumformiat und Wasser umgewandelt werden. Als Katalysator dient hierbei Zinkoxid oder Zinktitanoxid. Der Katalysator ist porös geschichtet und wird vom Wasserstoff durchströmt. Eine Membran wird nicht verwendet.

Die Aufgabe der vorliegenden Erfindung besteht darin, eine Speicheranordnung zu schaffen, mittels derer auf einfache und energetisch effiziente Weise Wasserstoff in höherer Dichte gespeichert werden kann. Die Speicheranordnung soll hierbei nach Bedarf in kleinem Maßstab oder auch in großem Maßstab realisiert werden können. Weiterhin soll die Handhabung des gespeicherten Wasserstoffs auf einfache und umweltverträgliche Weise möglich sein.

Die Aufgabe wird durch eine Speicheranordnung mit den Merkmalen des Anspruchs 1 und ein Verfahren zum Betreiben einer derartigen Speicheranordnung mit den Merkmalen des Anspruchs 4 gelöst. Vorteilhafte Ausgestaltungen sind Gegenstand der abhängigen Ansprüche 2 und 3.

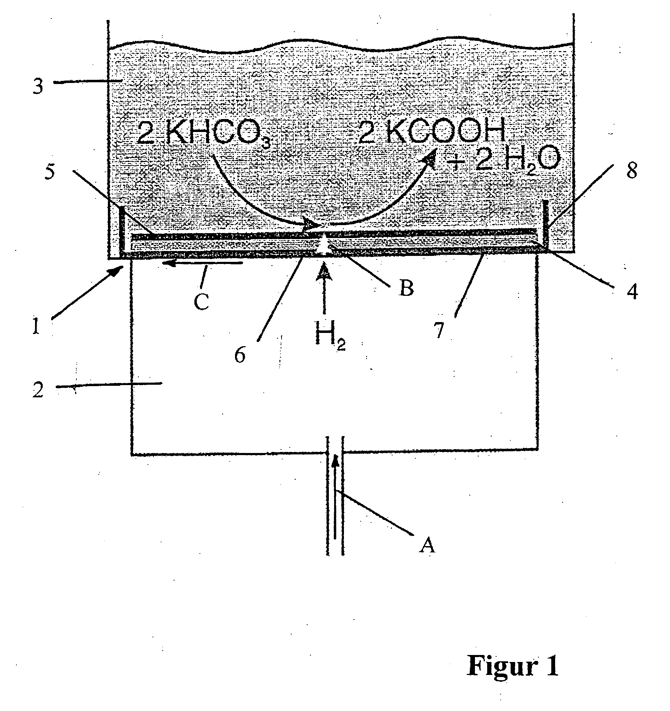

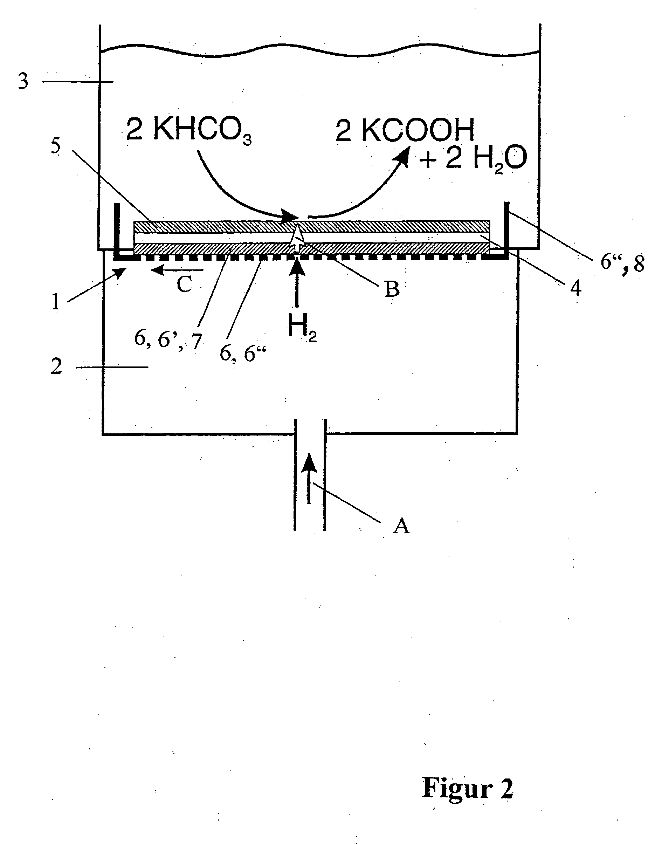

Die vorliegende Erfindung wird nachfolgend anhand eines Ausführungsbeispiels näher erläutert. Hierbei zeigen in Prinzipdarstellung die
- Figuren 1 und 2: je eine Speicheranordnung zum reversiblen Speichern von Wasserstoff.

Gemäß den Figuren 1 und 2 weist eine Speicheranordnung zum reversiblen Speichern von Wasserstoff eine Schichtmembran 1 auf. Die Schichtmembran 1 trennt einen Gasbereich 2, in dem sich gasförmiger Wasserstoff befindet, von einem Flüssigkeitsbereich 3, in dem sich eine wässrige Lösung aus Kaliumcarbonat oder Kaliumhydrogencarbonat befindet.

Die Schichtmembran 1 weist eine Mittelschicht 4, eine erste Außenschicht 5 und eine zweite Außenschicht 6 auf. Die zweite Außenschicht 6 weist einen ersten Teilbereich 7 auf. Der erste Teilbereich 7 ist hierbei dadurch definiert, dass er an den Gasbereich 2 angrenzt. Die zweite Außenschicht 6 weist weiterhin einen zweiten Teilbereich 8 auf. Der zweite Teilbereich 8 entspricht dem verbleibenden Teil der Außenschicht 6. Mit dem zweiten Teilbereich 8 steht die zweite Außenschicht 6 mit der wässrigen Lösung von Kaliumcarbonat oder Kaliumhydrogencarbonat in Kontakt.

Die Mittelschicht 4 ist zwischen der ersten Außenschicht 5 und dem ersten Teilbereich 7 der zweiten Außenschicht 6 angeordnet. Sie grenzt an die erste Außenschicht 5 und den ersten Teilbereich 7 der zweiten Außenschicht 6 an. Die Mittelschicht 4 überdeckt hierbei den ersten Teilbereich 7 der zweiten Außenschicht 6 vollständig.

Die Mittelschicht 4 besteht aus einem Material, das durchlässig für Protonen, aber undurchlässig für Elektronen und Wasserstoffgas ist. Derartige Materialien sind Fachleuten allgemein bekannt. Sie sind beispielsweise unter den Handelsnamen Nafion und Celtec erhältlich.

Die erste Außenschicht 5 grenzt gemäß den Figuren 1 und 2 an den Flüssigkeitsbereich 3 an, in dem sich die wässrige Lösung von Kaliumcarbonat oder Kaliumhydrogencarbonat befindet. Die erste Außenschicht 5 ist katalytisch aktiv. Die katalytische Aktivität kann beispielsweise dadurch erreicht werden, dass die erste Außenschicht 5 aus Platin, Quecksilber oder Nickel oder aus einer mindestens eines dieser Metalle enthaltenden Legierung besteht. Alternativ kann die erste Außenschicht 5 aus einer Mischung eines Nichtmetalls (z. B. Kohlenstoffpulver oder Kohlenstofffasern) und eines der vorgenannten Metalle bzw. einer der vorgenannten Legierungen bestehen.

Auch die zweite Außenschicht 6 ist katalytisch aktiv. Die katalytische Aktivität kann beispielsweise dadurch erreicht werden, dass die zweite Außenschicht 6 aus Platin oder aus einer Platin enthaltenden Legierung besteht. Vorzugsweise jedoch besteht die zweite Außenschicht 6 aus Palladium oder aus einer Palladium enthaltenden Legierung. Besonders bevorzugt besteht sie aus einer Platin-Palladium-Legierung.

Gemäß Figur 1 ist die zweite Außenschicht 6 als einheitliche Schicht ausgebildet. Gemäß Figur 2 ist die zweite Außenschicht 6 in zwei Teilschichten 6', 6" aufgeteilt. Die erste Teilschicht 6' von Figur 2 entspricht der zweiten Außenschicht 6 von Figur 1. Sie ist katalytisch aktiv. Sie besteht vorzugsweise aus Platin, Palladium oder einer entsprechenden Legierung. Sie erstreckt sich über den ersten Teilbereich 7. Die zweite Teilschicht 6" ist nicht katalytisch aktiv. Sie erstreckt sich zumindest über den zweiten Teilbereich 8, gemäß Figur 2 über beide Teilbereiche 7, 8. Die zweite Teilschicht 6" dient ausschließlich dem Zuführen der Elektronen zur wässrigen Lösung von Kaliumcarbonat bzw. Kaliumhydrogencarbonat.

Die erfindungsgemäße Speicheranordnung wird wie folgt betrieben:
Entsprechend einem Pfeil A wird Wasserstoffgas in den Gasbereich 2 geleitet. Das Wasserstoffgas wird in dem ersten Teilbereich 7 der zweiten Außenschicht 6 in Protonen und Elektronen gespalten. Die Protonen diffundieren entsprechend einem Pfeil B durch die Mittelschicht 4 in die erste Außenschicht 5. Die Elektronen werden entsprechend einem Pfeil C über den zweiten Teilbereich 8 und die wässrige Lösung von Kaliumcarbonat oder Kaliumhydrogencarbonat zu der ersten Außenschicht 5 geführt. An der ersten Außenschicht 5 erfolgt sodann eine chemische Redox-Reaktion von Kaliumcarbonat oder Kaliumhydrogencarbonat mit den Protonen und Elektronen zu Kaliumformiat und Wasser.

Das Kaliumformiat kann mittels geeigneter Katalysatoren (beispielsweise Palladium) und Wasser in einem weiteren, nachgeschalteten Prozess zu Kaliumhydrogencarbonat oxidiert werden. Hierbei wird entweder Wasserstoff freigesetzt oder unter Bildung von Wasser direkt Strom erzeugt. Der weitere, nachgeordnete Prozess kann hierbei in räumlicher Nähe der dargestellten Speicheranordnung erfolgen. Alternativ kann das Kaliumformiat entfernt und zu einem anderen Ort transportiert werden, an dem die Rückumwandlung vorgenommen wird. Die Rückumwandlung ist Fachleuten allgemein bekannt.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

- 1: Schichtmembran
- 2: Gasbereich
- 3: Flüssigkeitsbereich
- 4: Mittelschicht
- 5, 6: Außenschichten
- 6', 6": Teilschichten
- 7, 8: Teilbereiche

- A - C: Pfeile

## Patentansprüche

1. Speicheranordnung zum reversiblen Speichern von Wasserstoff,
- wobei die Speicheranordnung eine Schichtmembran (1) aufweist,
- wobei die Schichtmembran (1) eine Mittelschicht (4), eine katalytisch aktive erste Außenschicht (5) und eine zweite Außenschicht (6) aufweist,
- wobei die zweite Außenschicht (6) einen katalytisch aktiven ersten Teilbereich (7) und einen zweiten Teilbereich (8) aufweist,
- wobei die Mittelschicht (4) zwischen der ersten Außenschicht (5) und dem ersten Teilbereich (7) der zweiten Au-βenschicht (6) angeordnet ist und an die erste Außenschicht (5) und den ersten Teilbereich (7) der zweiten Außenschicht (6) angrenzt,
- wobei die Mittelschicht (4) den ersten Teilbereich (7) der zweiten Außenschicht (6) vollständig überdeckt,
- wobei die Mittelschicht (4) aus einem Material besteht, das durchlässig für Protonen, aber undurchlässig für Elektronen und Wasserstoffgas ist,
- wobei die erste Außenschicht (5) an einen Flüssigkeitsbereich (3) angrenzt, in dem sich eine wässrige Lösung von Kaliumcarbonat oder Kaliumhydrogencarbonat befindet,
- wobei die zweite Außenschicht (6) in dem ersten Teilbereich (7) an einen Gasbereich (2) angrenzt, in dem sich Wasserstoffgas befindet,
- wobei die zweite Außenschicht (6) in dem zweiten Teilbereich (8) mit der wässrigen Lösung von Kaliumcarbonat oder Kaliumhydrogencarbonat in Kontakt steht.

2. Speicheranordnung nach Anspruch 1,
**dadurch gekennzeichnet,**
**dass** die erste Außenschicht (5) aus Platin, Quecksilber oder Nickel oder aus einer mindestens eines dieser Metalle enthaltenden Legierung oder aus einer Mischung eines Nichtmetalls mit einem der vorgenannten Metalle oder der vorgenannten Legierung besteht.

3. Speicheranordnung nach Anspruch 1 oder 2,
**dadurch gekennzeichnet,**
**dass** die zweite Außenschicht (6) zumindest im ersten Teilbereich (7) aus Platin, aus Palladium oder aus einer Platin und/oder Palladium enthaltenden Legierung besteht oder eine aus einem dieser Materialien bestehende Teilschicht (6') aufweist.

4. Verfahren zum Betreiben einer Speicheranordnung nach Anspruch 1, 2 oder 3, **dadurch gekennzeichnet,**
- **dass** das Wasserstoffgas in den Gasbereich (2) geleitet wird (Pfeil A),
- **dass** das Wasserstoffgas in dem ersten Teilbereich (7) der zweiten Außenschicht (6) in Protonen und Elektronen aufgespalten wird,
- **dass** die Protonen durch die Mittelschicht (4) in die erste Außenschicht (5) diffundieren (Pfeil B),
- **dass** die Elektronen über den zweiten Teilbereich (8) und die wässrige Lösung von Kaliumcarbonat oder Kaliumhydrogencarbonat zu der ersten Außenschicht (5) geführt werden (Pfeil C) und
- **dass** an der ersten Außenschicht (5) eine chemische Redox-Reaktion von Kaliumcarbonat oder Kaliumhydrogencarbonat mit den Protonen und Elektronen zu Kaliumformiat und Wasser erfolgt.

## Claims

1. Storage arrangement for reversible storage of hydrogen,
- wherein the storage arrangement comprises a layer membrane (1),
- where in the layer membrane (1) comprises a middle layer (4), a catalytically active first outer layer (5) and a second outer layer (6),
- wherein the second outer layer (6) has a catalytically active first sub-region (7) and a second sub-region (8),
- wherein the middle layer (4) is arranged between the first outer layer (5) and the first sub-region (7) of the second outer layer (6) and adjoins the first outer layer (5) and the first sub-region (7) of the second outer layer (6),
- wherein the middle layer (4) completely covers the first sub-region (7) of the second outer layer (6),
- wherein the middle layer (4) consists of a material which is permeable for protons, but impermeable for electrons and hydrogen gas,
- wherein the first outer layer (5) adjoins a liquid region in which an aqueous solution of potassium carbonate or potassium bicarbonate is disposed,
- wherein the second outer layer (6) in the first sub-region (7) adjoins a gas region (2) in which hydrogen gas is disposed and
- wherein the second outer layer (6) in the second sub-region (8) is in contact with the aqueous solution of potassium carbonate or potassium bicarbonate.

2. Storage arrangement according to claim 1, **characterised in that** the first outer layer (5) consists of platinum, mercury or nickel or of an alloy containing at least one of these metals or of a mixture of a non-metal with one of the aforesaid metals or the aforesaid alloy.

3. Storage arrangement according to claim 1 or 2, **characterised in that** the second outer layer (6) at least in the first sub-region (7) consists of platinum, palladium or an alloy containing platinum and/or palladium or a sub-layer (6') consisting of one of these materials.

4. Method of operating a storage arrangement according to claim 1, 2 or 3, **characterised in that**
- the hydrogen gas is conducted into the gas region (2) (arrow A),
- the hydrogen gas in the first sub-region (7) of the second outer layer (6) is split into protons and electrons,
- the protons diffuse through the middle layer (4) into the first outer layer (5) (arrow B),
- the electrons are led by way of the second sub-region (8) and the aqueous solution of potassium carbonate or potassium bicarbonate to the first outer layer (5) (arrow C) and
- a chemical oxidation reaction of potassium carbonate or potassium bicarbonate by the protons and electrons to form potassium formiate and water takes place at the first outer layer (5).

## Revendications

1. Système de stockage pour le stockage réversible d'hydrogène,
- le système de stockage présentant une membrane composite (1),
- la membrane composite (1) présentant une couche intermédiaire (4), une première couche externe (5) active sur le plan catalytique et une deuxième couche externe (6),
- la deuxième couche externe (6) présentant une première zone partielle (7) active sur le plan catalytique et une deuxième zone partielle (8),
- la couche intermédiaire (4) étant disposée entre la première couche externe (5) et la première zone partielle (7) de la deuxième couche externe (6) et jouxtant la première couche externe (5) et la première zone partielle (7) de la deuxième couche externe (6),
- la couche intermédiaire (4) recouvrant complètement la première zone partielle (7) de la deuxième couche externe (6),
- la couche intermédiaire (4) étant constituée d'un matériau qui est perméable aux protons mais imperméable aux électrons et au gaz d'hydrogène,
- la première couche externe (5) jouxtant une zone de fluide (3) dans laquelle se trouve une solution aqueuse de carbonate de potassium ou d'hydrogénocarbonate de potassium,
- la deuxième couche externe (6) jouxtant, dans la première zone partielle (7), une zone de gaz (2) dans laquelle se trouve le gaz d'hydrogène,
- la deuxième couche externe (6) dans la deuxième zone partielle (8) étant en contact avec la solution aqueuse de carbonate de potassium ou d`hydrogénocarbonate de potassium.

2. Système de stockage selon la revendication 1,
**caractérisé en ce que**
la première couche externe (5) est constituée de platine, de mercure ou de nickel ou d'un alliage contenant au moins l'un de ces métaux ou d'un mélange d'un matériau non métallique et de l'un des métaux précédemment cités ou de l'alliage précédemment cité.

3. Système de stockage selon la revendication 1 ou 2,
**caractérisé en ce que**
la deuxième couche externe (6) est constituée au moins dans la première zone partielle (7) de platine, de palladium ou d'un alliage contenant du platine et/ou du palladium ou d'une couche partielle (6') constituée de l'un de ces matériaux.

4. Procédé d'exploitation d'un système de stockage selon la revendication 1, 2 ou 3, **caractérisé en ce que**
- le gaz d'hydrogène est conduit dans la zone de gaz (2) (flèche A),
- le gaz d'hydrogène dans la première zone partielle (7) de la deuxième couche externe (6) est clivé en protons et électrons,
- les protons se diffusent au travers de la couche intermédiaire (4) dans la première couche externe (5) (flèche B),
- les électrons, par la deuxième zone partielle (8), et la solution aqueuse de carbonate de potassium ou d'hydrogénocarbonate de potassium sont acheminés à la première couche externe (5) (flèche C) et,
- sur la première couche externe (5) se produit une réaction chimique redox du carbonate de potassium ou de l'hydrogénocarbonate de potassium avec les protons et les électrons pour donner du formiate de potassium et de l'eau.
